(19) Europäisches Patentamt
European Patent Office
Office européen des brevets

(11) **EP 2 571 225 B1**

(12) **EUROPEAN PATENT SPECIFICATION**

(45) Date of publication and mention
of the grant of the patent:
**10.10.2018 Bulletin 2018/41**

(51) Int Cl.:
***H04L 29/06*** *(2006.01)*

(21) Application number: **12006198.1**

(22) Date of filing: **31.08.2012**

(54) **A method for detecting data misuse in an organization's network**

Verfahren zum Erkennen von Datenmissbrauch im Netzwerk einer Organisation

Procédé de détection de mauvais usage de données dans un réseau d'organisation

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.09.2011 IL 21523211**

(43) Date of publication of application:
**20.03.2013 Bulletin 2013/12**

(73) Proprietor: **Deutsche Telekom AG
53113 Bonn (DE)**

(72) Inventors:
 • **Shabtai, Asaf
  Ness Ziona (IL)**
 • **Gafny, Ma'ayan
  Hadera (IL)**
 • **Rokach, Lior
  Omer (IL)**
 • **Elovici, Yuval
  79864 Arugot (IL)**

(74) Representative: **Flaccus, Rolf-Dieter
Flaccus · Müller-Wolff
Patentanwälte
Bussardweg 10
50389 Wesseling (DE)**

(56) References cited:
**US-A1- 2008 271 143**

• M. Gafny, A. Shabtai, L. Rokach, Y. Elovici:
"Detecting Data Misuse by Applying
Context-Based Data Linkage", Proceedings of
the 2010 ACM workshop on Insider threats , 8
October 2010 (2010-10-08), XP002688271,
Retrieved from the Internet:
URL:http://dl.acm.org/citation.cfm?id=1866
886.1866890&coll=DL&dl=GUIDE [retrieved on
2012-11-29]
• SUNU MATHEW ET AL: "A Data-Centric
Approach to Insider Attack Detection in Database
Systems", 15 September 2010 (2010-09-15),
RECENT ADVANCES IN INTRUSION DETECTION,
SPRINGER BERLIN HEIDELBERG, BERLIN,
HEIDELBERG, PAGE(S) 382 - 401, XP019150458,
ISBN: 978-3-642-15511-6 * the whole document *
• DOSS G ET AL: "Developing insider attack
detection model: A grounded approach",
INTELLIGENCE AND SECURITY INFORMATICS,
2009. ISI '09. IEEE INTERNATIONAL
CONFERENCE ON, IEEE, PISCATAWAY, NJ,
USA, 8 June 2009 (2009-06-08), pages 107-112,
XP031481213, ISBN: 978-1-4244-4171-6
• GUHA S ET AL: "ROCK: a robust clustering
algorithm for categorical attributes", DATA
ENGINEERING, 1999. PROCEEDINGS., 15TH
INTERNATIONAL CONFERENCE ON SYDNEY,
NSW, AUSTRALIA 23-26 MARCH 1999, IEEE
COMPUT. SOC, LOS ALAMITOS, CA, USA, 23
March 1999 (1999-03-23), pages 512-521,
XP010326171, ISBN: 978-0-7695-0071-3
• AGRAWAL R ET AL: "MINING ASSOCIATION
RULES BETWEEN SETS OF ITEMS IN LARGE
DATABESES", SIGMOD RECORD, ACM, NEW
YORK, NY, US, vol. 22, no. 2, 1 June 1993
(1993-06-01), pages 207-216, XP000575841, ISSN:
0163-5808, DOI: 10.1145/170036.170072

• M. Gafny, A. Shabtai, L. Rokach, Y. Elovici: "Poster: applying unsupervised context-based analysis for detecting unauthorized data disclosure", CCS '11 Proceedings of the 18th ACM conference on Computer and communications security , 21 October 2011 (2011-10-21), XP002688272, Retrieved from the Internet: URL:http://delivery.acm.org/10.1145/210000 0/2093488/p765-gafny.pdf?ip=145.64.134.241 &acc=ACTIVE%20SERVICE&CFID=149120501& CFTOK EN=11719937&__acm__=1354188941_84eeddd7 5ba 5f77b7fd99859bc8992a3 [retrieved on 2012-11-29]

## Description

### Field of the Invention

The present invention relates to the field of security in computer systems, specifically this invention relates to the field of detection of unauthorized data disclosure.

### Background of the Invention

Publications and other reference materials referred to herein, are numerically referenced in the following text and respectively grouped in the appended Bibliography which immediately precedes the claims.

Protecting sensitive information (e.g., intellectual property, customer data, and patient records) from unauthorized disclosure is a major concern of every organization. Since the organization's employees or partners need to access such information in order to perform their daily work, data leakage and misuse detection and/or prevention are very challenging tasks.

Data leakage is defined as the accidental or unintentional distribution of private or sensitive data to an unauthorized entity. Data misuse is defined as insider abuse of legitimate permission in order to access data [1]. Both data leakage and data misuse are serious issues for organizations as the number of incidents and the cost to those experiencing them continue to increase. Whether caused by malicious intent or an inadvertent mistake, data loss can diminish a company's brand, reduce shareholder value, and damage the company's goodwill and reputation.

Data leakage/ misuse detection and/or prevention is especially difficult when an insider causes the leakage. According to 2010 CyberSecurity Watch Survey [2], 51% of reported cyber attacks were a result of an insider attack. The most commonly reported attacks are: unintentional exposure of private or sensitive information (29% performed by insiders); theft of intellectual property (16% performed by insiders); and theft of other (proprietary) information such as customer or financial records (15% performed by insiders). Additionally, according to the report, 67% of the organizations report that insider attacks are much more costly to the organization than outsider attacks.

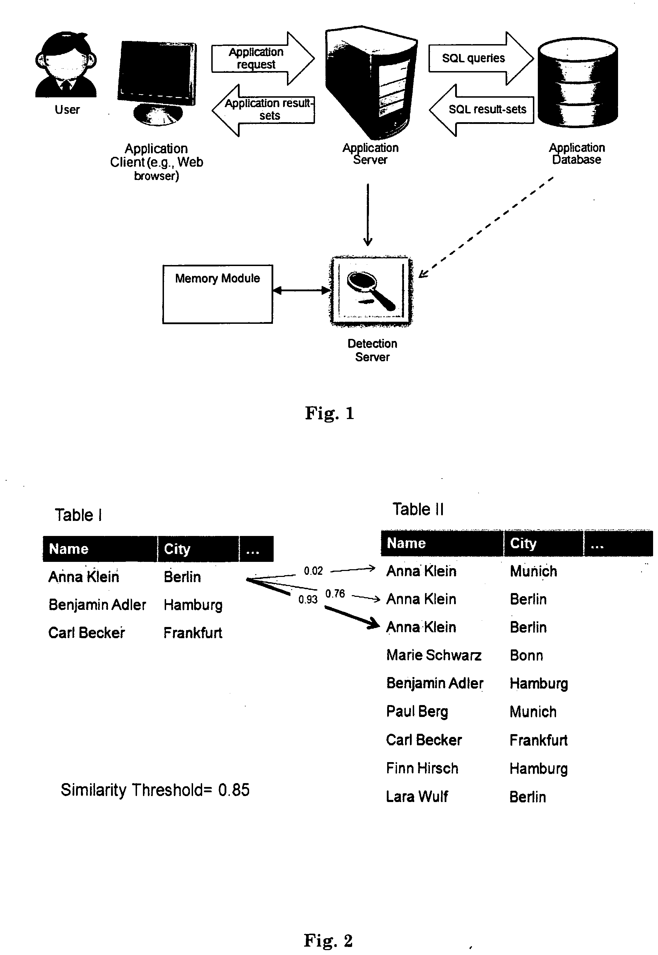

The present invention is related to the problem of detecting potential data misuse by an insider in the following scenario (see Fig. 1). Users interact with a system using a client application (e.g., browser). The user can submit requests (for data) in order to perform various tasks. For example, a salesman may need to see customer activity during the past year in order to offer him or her new products. These requests are submitted to an application server that interacts with a database in order to retrieve the required data and to send the result-sets to the user.

Each user accesses the system within a specific role (e.g., a manager) and is assigned a set of permissions to allow him/her to perform tasks. This, however, creates a problem since a user may exploit his/her legitimate access rights in order to leak data or to take actions that are not in line with the organization's goals and which might harm the organization. For example, a user may access customer records in order to sell them to a competitor or in order to commit identity theft.

There have been several research efforts to deal with this scenario and to detect potential data misuse. Most of these efforts focus on deriving user behavioral profiles that define normal user behavior and issue an alert whenever a user's behavior deviates from the normal profile. The most common approach for representing user behavioral profiles is by analyzing the SQL query string submitted by the application server to the database (as a results of a user's requests) and extracting various features from the SQL statements [3]. This approach, however, is prone to errors since the same result-set may be produced by different SQL queries, causing high false positive and high false negative rates.

Another approach for representing a user's behavioral profile focuses on what the user is trying to access instead of how he expresses his request. According to this approach anomalies are detected by analyzing the data exposed to the user, i.e., the result-sets [4].

Whenever analyzing a user's request for data, features that define the context in which the request has been issued (such as the time of request and location of the user) should be considered. The importance of using contextual features was acknowledged by Mathew et al. [4] but they haven't been used in related works which focused only on analyzing access to database records.

### Data Linkage

*Data linkage* is the task of linking records from different datasets that refer to the same entity [5][6]. The task is required for different goals, but is usually used as a preparatory step for various data mining projects [7]. For example, assuming records from two different tables that define the same entity, note that the two tables may originate from different systems or data sources. If the records do not have a foreign key (FK) relation or a similar primary key (PK), they cannot be linked using a simple SQL join. Therefore, a more complex action is needed in order to match the congruent records.

It is common to divide data linkage into two types: one-to-one and one-to-many. For *one-to-one* data linkage, the goal is to associate one record in table A to a single matching record in table B. In the case of one-to-many data linkage, the goal is to associate one record in table A to multiple matching records in table B.

Various algorithms implement different data linkage methods. Cohen [8] offers a method in which data linkage is done by calculating cosine distance between two records in different datasets. Galhardas et al. [9] suggest an SQL extension to build clusters of similar records, using decision functions to determine whether two records should be linked or not. Nahm et al. [10] propose using a support vector machine (SVM), while Mccallum et al. [11] and Gu et al. [12] advocate clustering methods in order to identify record pairs. Sarawagi and Bhamidipaty [13] suggest an active learning approach in order to induce data- linkage classifier models that are automatically updated for each new record examined.

Fig. 2 presents a general example of the data linkage task. In the example, two tables (Table I and Table II), from two different data sources are presented. The goal is to link records in Table I to the most similar record in Table II. For each record in Table I a similarity grade is assigned to each record in Table II according to a similarity function. If the similarity exceeds a predefined threshold, the records are considered a match and linked together.

## Misuse Detection in Databases

Several related works deal with detecting anomalous access to databases. These works seek to protect the data in a database from: an insider who is authorized to access the database (via management application or other application) but submits anomalous queries that might indicate possible data misuse (e.g., data harvesting); an insider abusing his legitimate privileges to masquerade as another user in order to gather data for malicious purposes; or, from the outside attacker maliciously trying to extract data (e.g., via SQL injection).

Most of the proposed methods focus on learning normal queries of users or roles and, during the monitoring phase, identifying abnormal queries.

Two main types of features are used to model a query; syntax-centric and *data-centric*. The syntax-centric approach relies on the SQL-expression syntax of queries to construct user profiles by creating for example, a frequency vector of keywords (SELECT, FROM...), The data-centric approach focuses on what the user is trying to access instead of how he expresses his request. It models the query by extracting features from the result-set of the query, for example, the number of tuples, the min, max and average of attributes etc.

Gafny, et al. ["Detecting Data Misuse By Applying Context-Based Data Linkage", Proceedings of the 2010 ACM workshop on insider threats, 8 October 2010, pp. 3-11] discloses a method for identifying suspicious insiders who can access data stored in a database via an application. In the method disclosed in this article suspicious access to sensitive data is detected by analyzing the result-sets sent to the user following a request that the user submitted. Result-sets are analyzed within the instantaneous context in which the request was submitted.

The disclosed method applies data-linkage techniques in order to link the contextual features and the result-sets. Using a supervised approach, machine learning algorithms are then employed for generating a behavioral model during a learning phase. The behavioral model encapsulates knowledge on the behavior of a user; i.e., the characteristics of the result-sets of legitimate or malicious requests. This behavioral model is used for identifying malicious requests based on their abnormality.

## Summary of the Invention

The invention is a method according to the features of claim 1. Advantageous embodiments thereof are defined in the dependent claims.

## Brief Description of the Drawings

- Fig. 1 schematically shows the main scenario of this paper. The user submits requests in order to perform various tasks. These requests are forwarded to an application server, which interacts with a database in order to retrieve the required data and to send the result-sets to the user;

- Fig. 2 schematically shows an example of a data linkage task;

- Fig. 3 schematically shows an example of normal (benign) and abnormal (malicious) requests. Result-sets are labeled and the context of each request is extracted;

- Fig. 4 schematically shows the processed data;

- Fig. 5 schematically shows a supervised detection model;

- Fig. 6 Classifying a request as benign/malicious using a supervised decision model. The request is executed in the morning at a shop in Berlin. The record retrieved describes a customer living in Berlin. Therefore the action is classified as benign. (the classification process in highlighted);

- Fig. 7 Settings of the data used for training the supervised model;

- Fig. 8 Settings of the data used for training the unsupervised model and for testing both supervised and unsupervised models;

- Fig. 9 schematically shows the proposed unsupervised detection model;

- Fig. 10 schematically shows the construction of the tree model - splitting the dataset after selecting the 'Location' context attribute to be the next level node;

- Fig. 11 schematically shows an example of measuring the quality of a splitting attribute 'ActionLocation';

- Fig. 12 schematically shows the process of deriving a set of rules representing a leaf data set;

- Fig. 13 schematically shows the ROC curves of the supervised and the unsupervised approach; and

- Fig. 14 schematically shows a flow chart of the method of the present invention.

Detailed Description of Embodiments of the Invention

The present invention presents a new approach for identifying suspicious activity by insiders who use an application to access data stored in a database. In the present invention, suspicious access to sensitive data is detected by analyzing the result-sets visible to the user as a result of a request submitted by him. Result-sets are analyzed within the instantaneous context in which the request was submitted. A level of anomaly is derived by analyzing the result-set and the context in which the query was performed. If the derived level exceeds a predefined threshold, an alert can be sent to a security officer. The present invention applies data-linkage techniques in order to link between the contextual features and the result-sets. Data-linkage is a method used for linking two data items that refer to the same entity but which have no obvious connection [5][6]. Machine learning algorithms are applied for inducing a behavioral model during a learning phase. The behavioral model encapsulates knowledge on the behavior of a user; i.e., the characteristics of the result-sets of legitimate or malicious requests. This behavioral model is used for identifying malicious or abnormal requests.

The contribution of the present invention over the methods of the prior art is threefold. First, by analyzing both the result-sets as well as the data that the user is exposed to, the method enhances the accuracy of the detection.

Second, the profiling process takes into consideration the context of the request in order to further improve detection accuracy and to better distinguish between a normal and abnormal request. This is important since the same request may be legitimate if performed within one context but abnormal within another. Third, the detection can be performed only on the link between the user (i.e., application client in Fig. 1) and the application server. Since information from database logs is not required, the need to correlate between the identity of the user and the matching SQL queries in the database is eliminated.

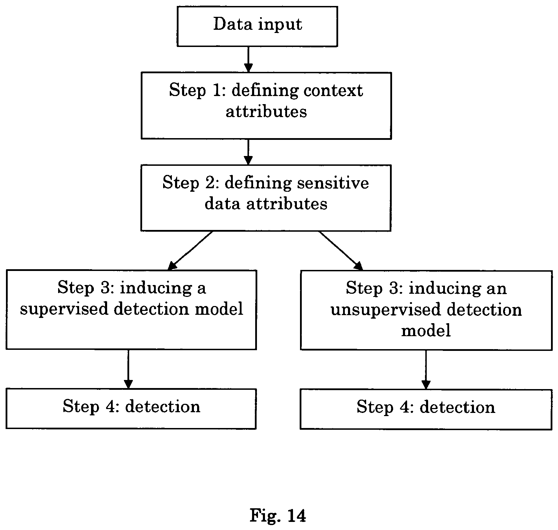

The method of the present invention is divided into the following four steps as shown in Fig. 14:

**1. Defining context attributes**

In the first step, a domain expert decides which attributes are relevant for the detection process, and configures them into the system. Out of these attributes a set of context attributes are identified so that together they define the context in which a request is executed. Examples of context attributes are: the time of execution (e.g., morning, afternoon, evening, after working hours); the geographical location of the user; the user's role (e.g., manager, salesman, DBA); system (e.g., third-partner system or organization internal system); user's seniority; type of transaction; user's age; user's origin; user's IP address; and information service (IS) Holidays. This set of context attributes is used when interpreting/deriving the level of suspiciousness of the result-set. The same result-set may be interpreted differently within different contexts.

**2. Defining sensitive data attributes**

In the next step the set of attributes of the sensitive data with which a user interacts is defined. This data may be exposed to the user during his or her work. For example, if a system enables users to access customer records, the customer's first name and last name; address; age; type; date of birth; place of birth; gender; occupation; type of payment; average purchase amount; telephone number; plan (pre-paid, family); seniority; products purchased; and quantity of product purchased are examples of attributes that might be defined as sensitive data.

3. Inducing a detection model

Once the context attributes and the sensitive data are defined, the detection model - i.e., the learning phase can be induced. The detection model encapsulates the expected behavior in various contexts. The learning phase can be supervised (i.e. the request in the training set has to be labeled as malicious or benign) or unsupervised (i.e. the requests in the training set do not need to be labeled, and therefore the learning is unsupervised). Eventually, a detection model is induced. This model encapsulates knowledge synthesized from result-sets of normal (and optionally abnormal) requests issued from within different contexts. Examples of how a detection model is induced are given herein below. Once a detection model is induced, the data attributes are invariable and cannot be changes. In order to change these attributes, the system has to be reconfigured accordingly; and, the model must be re-trained before detection with the new attributes can begin.

4. Detection

During the detection phase, when a new request arrives, its result-set is cross-validated against the detection model produced during the learning phase. Each result-set is matched with the context in which it was retrieved, and then cross-validated with the detection model. This cross-validation process will produce an anomaly score for the result set within the specific context. If the final anomaly score is greater than a predefined threshold, the query is suspected of being malicious and an alert may be sent to a security officer.

The threshold is defined by taking into consideration the tradeoff between the false positive rate (FPR) and the true positive rate (TPR). If the threshold chosen is too high, malicious requests may not be detected (low TPR). On the other hand, if the threshold defined is too low, many false alarms will be issued (high FPR).

**Supervised Approach**

The first example of the present invention includes the step of applying a supervised, multiple class detection model. The supervised detection model is a classifier that classifies a new result-set as either malicious or benign. Therefore, this example requires learning from both malicious and benign labeled examples. To illustrate this example of the invention, the well-known C4.5 algorithm [21] for inducing the decision tree in the Weka environment [22], was chosen, as can be seen in the examples herein below.

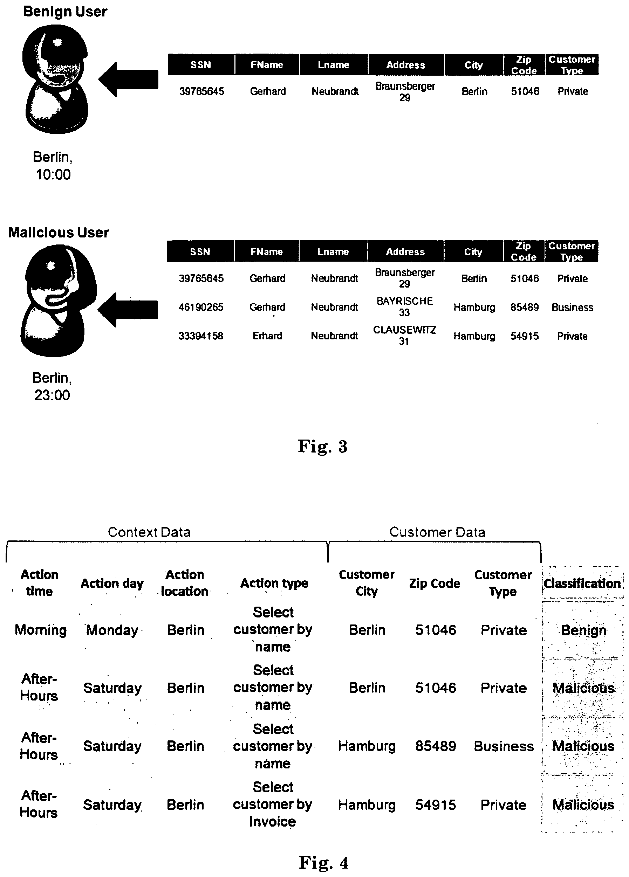

In order to perform the learning and to induce a detection model, result-sets of both benign and malicious requests are collected from the application server logs. For each request, the contextual attributes are collected as well. For example, Fig. 3 depicts two requests, benign and malicious, along with their contextual attributes and the matching result-sets. A benign user submits a request during working hours and a malicious user submits her request after working-hours. The result-sets consist of customer records including the first name, last name, address work place and customer type.

Next, the collected data (i.e., requests, context attributes and result-sets) are processed into a training-set format. For each record in the result-set, the matching contextual attributes are added and the new, extended record is labeled according to the request label (either as benign or malicious). Fig. 4 depicts the output of this processing phase.

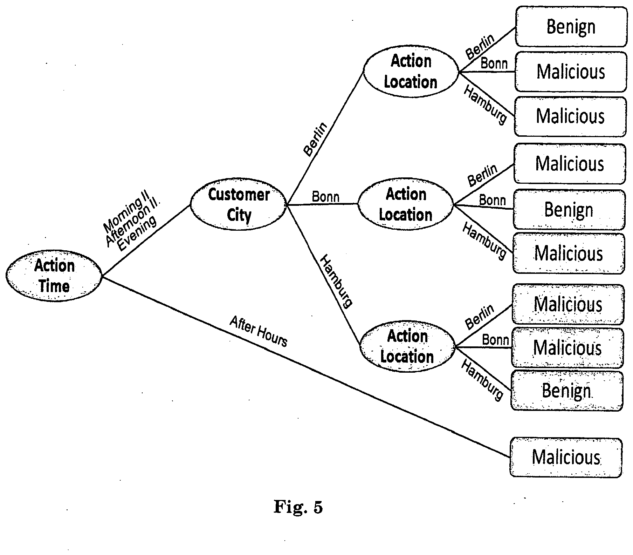

The processed dataset is then used for inducing a standard machine learning detection model. Fig. 5 depicts a supervised detection model. The nodes of the decision tree represent both context attributes, and sensitive data attributes. The leaves of the tree may possess one of two target (or class) attributes presented to the inducer in the training set: benign or malicious. The decision tree can classify individual records of sensitive data as malicious or benign while taking into account the context of the request.

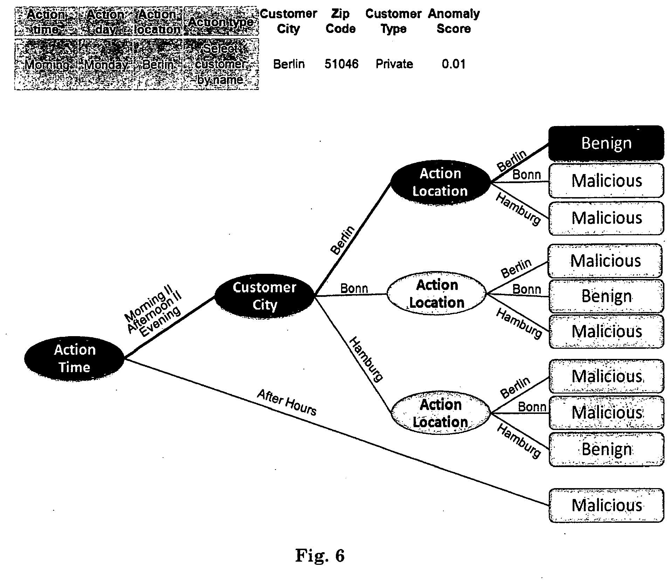

In the detection/classification phase, the goal is to detect suspicious/malicious requests. The first step in order to achieve this goal is to examine each record in the result-set independently. Each record is cross-validated against the detection model and is assigned an anomaly score that defines the probability of this record being malicious. After the anomaly scores for all the records in the result-set are derived, the request's anomaly score is calculated. This is done, for example, by calculating the average anomaly scores of all records in its matching result-set. If the query's anomaly score is greater than a pre-defined threshold, an alert is issued to the security officer. This process is presented in Fig. 6.

The supervised example proposed herein suffers from three major problems. First, the implemented solution uses supervised learning in order to induce the detection model. In the implementation described herein above, the requests were labeled according to the behavior from which they were derived. Nevertheless, when implementing this method on real data, using a supervised solution requires manually labeling the records in the training set. A solution for this is to assume that the transactions in the log are all legitimate (as is commonly assumed). Still, taking this approach would require artificially generating malicious requests. Second, the implemented algorithm induces a detection tree, which examines each record in the result set individually. This means that multiple scans of the tree are required. For example, if a result set consists of ten records, the detection model would be scanned ten times. The requirement for multiple scans results in longer detection time. Third, since the detection model is built based on examples of both malicious and benign records, if a new class of malicious behavior occurs, the model will not necessarily detect the anomalous behavior. This also means that retraining will be required quite often.

**Unsupervised Approach**

In order to overcome these drawbacks, a second example is presented.
This embodiment presents an unsupervised detection method. This method profiles normal behavior using a tree-like detection model. This detection model encapsulates a set of rules that describe the legitimate user behavior for each possible context. During the detection phase (step 4), upon the arrival of a new request, the appropriate set of rules is retrieved from the model according to the context of the query. Then, the result set is cross validated to see to what extent it is compliant with the set of rules. If the result set's incompatibility rate exceeds a predefined threshold, an alert is issued.

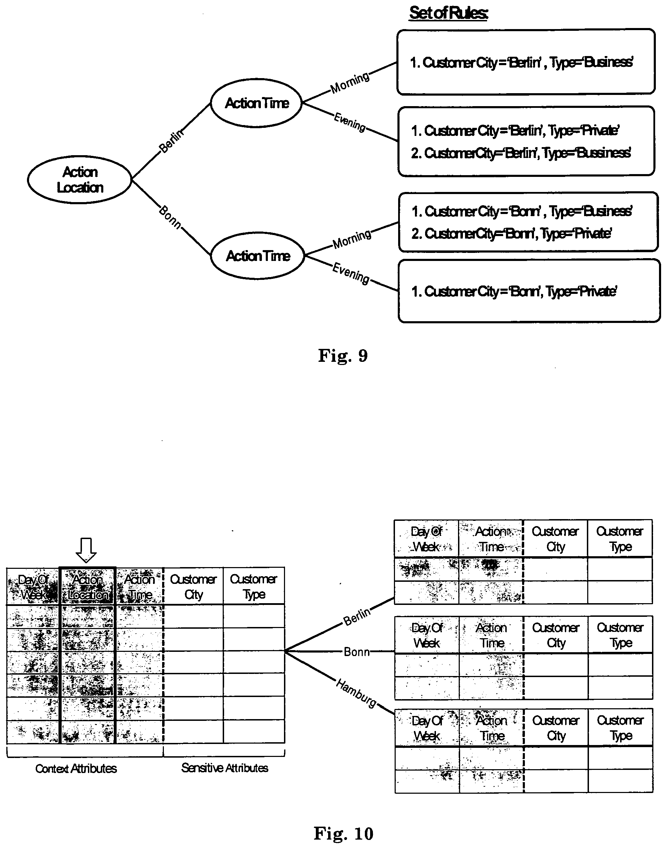

The second example required developing a new algorithm for inducing a tree-like detection model, in which each leaf would hold a set of rules while the nodes hold different contextual attributes. Each possible context is defined by a single path starting at the root of the tree and ending at a leaf. A leaf holds a set of rules defining what data may be seen in the specific context. These rules can be expressed in various ways, such as a set of frequent item-sets or a set of J48 decision trees representing the characteristics of the data retrieved in the specific context of the training set. This is a tree-like detection model in which each leaf holds a set of rules and the inner nodes represent different contextual attributes. An example of the proposed model is shown in Fig. 9. In this example, the context attributes are the 'Action-Location' and the 'ActionTime' and they appear in the inner nodes. The leaves contain a set of rules describing the expected (sensitive) data for each path of the tree (each possible context). For instance, according to the behavioral model presented in Fig. 9, a user from Berlin, submitting a request in the morning, normally requests for business customers living in Berlin. These rules are generated by extracting frequent item-sets that characterize the data which can be legitimately retrieved in the specific context.

The training set is composed of result sets and the context in which they were retrieved. A database or an application log can be used for this purpose. The requests in the training set do not need to be labeled, and therefore the learning is unsupervised. The assumption is that the majority of the requests in a log are legitimate. If some malicious activity is recorded in the log, it is of very small amount, and therefore will not have an effect on the detection model induced. Using this training set, a detection model is induced.

The construction of the decision tree is an iterative process that begins with an input dataset (i.e., the training set). In the first step, a context attribute is selected to be the root of the tree and the input dataset is then split into smaller datasets according to the values of the root attribute. The process is then repeated for a new context attribute, which is selected from the remaining attributes in the context attribute list, and placed in the next level of the tree. Similarly, the datasets, assigned to each attribute value from the previous level, are split into smaller datasets according to the values of the new attribute. The process ends when either all of the context attributes have already been used or the remaining dataset size is smaller than a predefined threshold. This process is demonstrated in Fig. 10. The table on the left of Fig. 10 is the complete (initial) training set. The three attributes on the left side of the table (day of week, action location and action time) are contextual attributes, while the two on the right side of the table (customer city and customer type) are sensitive attributes. In this example, the algorithm chooses the 'ActionLocation' attribute as the next splitting attribute (i.e., the next level node); therefore, three subsets are created- one for each possible values of the attribute: Berlin, Bonn, and Hamburg. The process is repeated for each of the subsets.

In each step of constructing the decision tree, the algorithm is required to choose the context attribute that will be placed in the next level of the tree. The split can be determined using various splitting criteria.

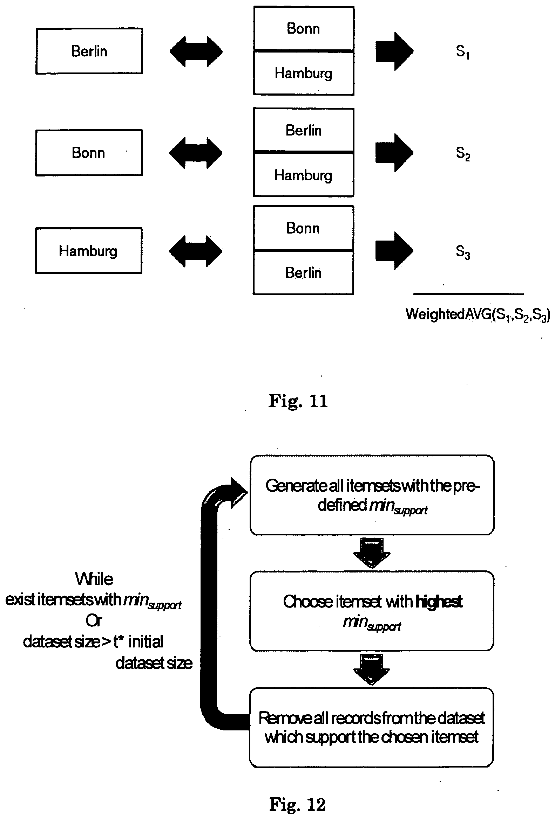

As a case in point, similarly to existing measures (e.g., entropy), the inventors propose a possible measure that ranks the remaining context attributes according to their ability to distinguish between the dataset of each of the possible values of the attribute was defined. For each possible split, the quality of the split is calculated by counting the number of records that appear in both of its subsets (the intersection between the subsets). This count is divided by the union size of the resulting subsets for normalization. If the examined attribute has more than two possible values, each possible value is examined against the union of all other subsets. An example of this process is shown in Fig. 11. The final score for the attribute is calculated by the weighted average of all the calculated outcomes. It is better to do the calculation this way as opposed to examining each possible pair of subsets because it is expected that the latter will yield very low similarity scores and therefore will be less accurate.

Once the decision tree is derived, each leaf contains a set of records that are normally retrieved within the specific context that is defined by the path that starts from the root node and ends at the leaf node. At this stage, each set of records is represented as a set of rules. There are two advantages of representing the leaves as a set of rules rather than keeping the legitimate set of data in each of the leaves. First, this allows creating a smaller and more generalized representation of the data. In addition, this allows the system to better cope with the frequent changes in the database. When keeping the entire data set in the leaf, any change in the database (e.g., INSERT, DELETE) might result in an outdated data set. This would mean that retraining would be necessary quite often. However, when representing the leaf data set as a set of rules, changes in the database would not necessarily require retraining.

One optional way of representing these rules is by finding the frequent item-sets representing the leaf dataset. The rules are derived from the sensitive attributes and context attributes that were not chosen as a splitting attribute during the construction of the tree. In the detection phase, a record in the result set that matches at least one of the rules is considered normal. Otherwise, it is marked as abnormal.

The process of deriving a set of frequent item- sets rules representing a specific leaf is described in Fig. 12. This is an iterative process in which the first step is to generate all the rules that are supported by a predefined number of records ($min_{support}$). Once a set of rules has been established, the rule with the highest support will be inserted into the final set of rules. Then, all records that support the chosen rule are deleted from the dataset, and the whole process is repeated with the remaining dataset.

The process is repeated until one of two possible stopping conditions is met: (1) no more rules can be generated with the minimal support required; or (2) the current dataset size is smaller than a predefined threshold t. This threshold is defined by a proportion of the original dataset size, and is designated for avoiding over-fitting. The output of this process is a set of rules that best represent the data set matching the specific leaf.

In the detection phase, in order to check to what extent the given data complies with the rules in the matching leaf, each record is cross validated against the leaf set of rules. The request's anomaly score is calculated by subtracting the proportion of the records that match at least one of the rules in the rule set from 1. If score is larger than the predefined threshold, the request is classified as malicious.

Another method for representing leafs dataset as rules is by representing the probability of each value in the leaf dataset, according to its probability, given the values in all other attributes $p(x_i| x_1...x_n)$. A possible way of doing so is by representing the probability of $p(x_i| \mu, \sigma^2)$ by building a J48 decision tree model for each possible attribute $x_i$, where $x_i$ is set as the class attribute. In the detection phase, in order to check to what extent the given data complies with the rules in the appropriate leaf, the maximum likelihood estimator (MLE) [24] is used. For each record in the dataset, a score is calculated according to the following:

$$score = 1 - \mu^{mle} = 1 - \arg\max \sum_{i=1}^{R} \log p(x_i \mid \mu, \sigma^2)$$

The request's score is the average of all individual record scores. If the request's score exceeds the given threshold, the request will be classified as malicious.

The second embodiment of the present invention has several important advantages. The first and most important is profiling user actions based on the context of the request. This is presumed to improve detection accuracy and to better distinguish between normal and abnormal requests since the same request may be legitimate if performed within one context but abnormal within another context. Another advantage of the proposed method is that it analyzes the result sets retrieved by the user, thus explicitly taking into account the data that might be leaked or misused. Third, since the model only describes legitimate behavior, training data consisting of only legitimate behavior is required. This means that there is no need to artificially add malicious records to the training set. Fourth, the detection model holds rules describing legitimate result-sets in each context. This allows examining the result-set as a whole without requiring multiple scans of each result-set. Finally, as the detection model represents normal behavior only, any behavior deviating significantly from the profile is considered to be malicious. This means that there is no need to retrain the model whenever a new type of malicious behavior is discovered. Instead, retraining is required only if the benign behavior is redefined.

**Evaluation of the two examples**

The examples of the method described in the present invention, were evaluated using a dataset which describes customer data of an organization which is shared with a business partner in order to allow collaborative work. The data includes requests for customer records of an organization, submitted by business partner of the organization.

The requests were characterized according to one of the following three behavior types:

- Normal: An employee searching for customer records within the same geographical location, during store opening hours.

- Malicious1: An employee searching, during opening hours, for a customer record who is not in the same geographical location as the store.

- Malicious2: An employee searching for any customer record after closing hours.

In addition, two types of users were identified: a benign user submits legitimate requests most of the time; however, on rare occasions, this user might have to perform actions that may seem malicious but are actually required in the course of his work. For example, it is assumed that a benign user has no reason to access records of customers living very far away from his place of work. However, in some cases, customers travel to a location different from their hometown and, requiring phone service, turn to a local branch for help. The clerk at the local branch would have to access the client's records in order to give him service. The case described presents an occasion in which a benign worker must perform a task that is malicious according to the original assumption.

A malicious user is an employee who queries the database for a purpose other than his work (e.g., data harvesting). A malicious user might try to hide his malicious intentions by mixing malicious queries with legitimate ones.

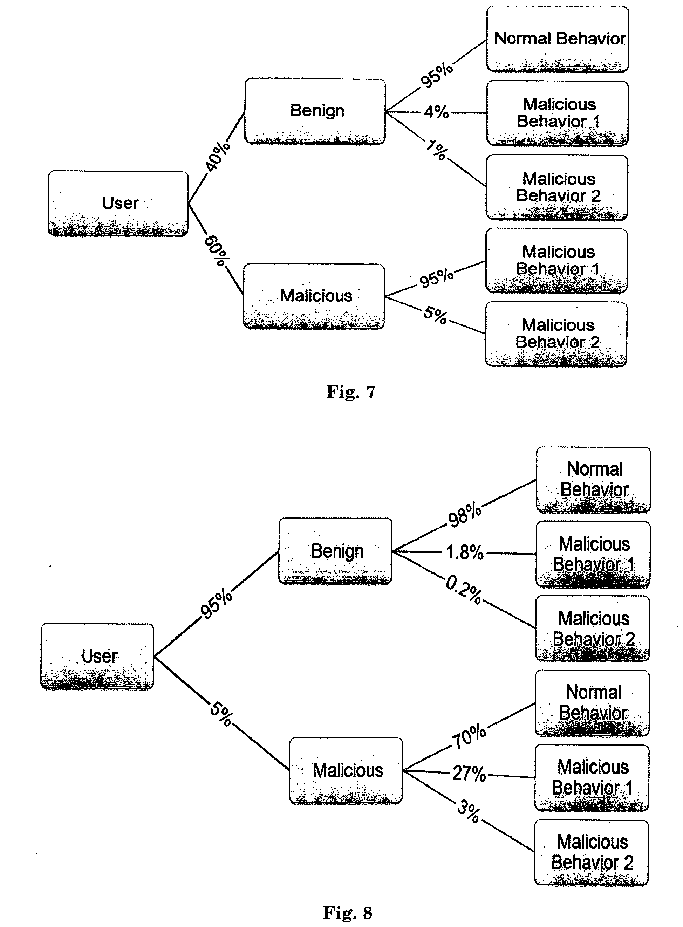

The settings for this evaluation were chosen according to what is presumed to be typical behavior. Therefore, most users were benign (95%) and only a small amount of users (5%) was malicious. 70% of the queries performed by a malicious user were considered normal (type 'Benign') and only 30% were malicious (type 'Malicious1' and 'Malicious2'). A benign user was configured to perform normal actions (type 'Benign') 98% of the time and the rest being malicious (see Fig. 8).

The dataset consisted of almost 150,000 transactions and their matching result sets, ranging over a period of two weeks. The transactions of the first week (about 75,000 transactions) were used for the purpose of training the unsupervised detection model, while the transactions of the second week were used for testing both supervised and unsupervised models.

In order to induce the supervised model, more malicious requests were required. Therefore, malicious requests were generated artificially. Following this, the database consisted of 39,738 benign user requests (95% normal action vs. 5% malicious actions), and the 58,246 malicious user requests (see Fig. 7).

The evaluation process used labeled data which was labeled by a domain expert. Each request was labeled according to the behavior that was identified. Therefore, the evaluation process was conducted by comparing the query's label with the query's classification, as derived by the method proposed.

For the purpose of evaluation, the context attributes were: time of execution, day of execution, geographical location of the action, the user's role, and the type of action performed. Sensitive data is defined as the data that should be protected from leaking to unauthorized people. Customer data that included details about the customer's name, address, zip code, place of work, and the customer type (e.g., business, private, student) is designated.

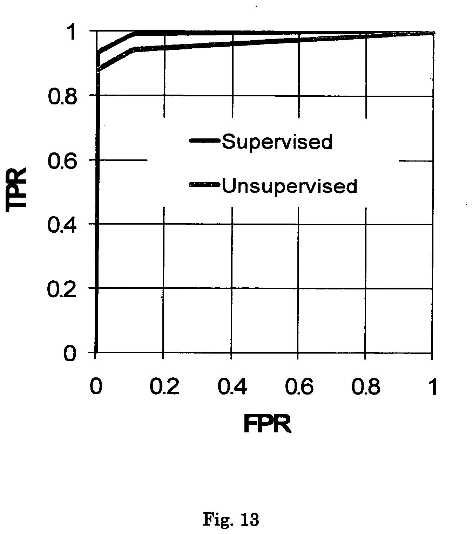

The results are described in the Receiver Operating Characteristic curve (ROC curve) in Fig. 13. The graph shows that a high true positive rate can be achieved with a very low false positive rate. This means that almost all of the malicious requests were detected, at the cost of very few false alarms. The area under the ROC curve is frequently used to assess the quality of a classifier [23]. It can be seen from Fig. 13 that the area under the curve (0.98 for the supervised example) is very close to the maximum possible, implying that the results achieved were very accurate.

The threshold was defined by examining the ROC curve. The conclusion of the inventors is that the optimal threshold value is when the probability of a query being malicious is between 0.5 (TPR of 0.93 and FPR of 0.09 for the unsupervised example) to 0.55 (TPR of 0.916 and FPR of 0.025 for the supervised example and TPR of 0.88 and FPR of 0.01 for the unsupervised example). A query with a lower anomaly score is considered benign and a query with a higher anomaly score is considered malicious.

Fig. 13 compares the ROC curves of the first (supervised) and the second (unsupervised) examples of the invention. It can be seen that the supervised approach yields slightly better results than the unsupervised approach.

However, the supervised approach requires a completely labeled training set containing both benign and malicious examples. This implies that malicious requests and matching result sets must be artificially generated and added to the database. This differs from the unsupervised approach, which does not require a labeled training set. Additionally, the unsupervised method is more efficient than the supervised method. When analyzing a new request, the supervised model needs to classify each record in the result set individually, before it generates the final anomaly score. The unsupervised approach on the other hand, offers a much more efficient detection process. The model is scanned only once in order to retrieve the relevant set of rules. Then, the result set is examined to see what proportion of it matches the rules.

The present invention offers several important advantages over the prior art methods. The first and most important is profiling user actions based on the context of the request. This is presumed to improve detection accuracy and to better distinguish between normal and abnormal requests since the same request may be legitimate if performed within one context but malicious or abnormal within another context. Another advantage of the present invention is that it examines the result set and not the query string. This is a better solution because it analyzes the data visible to the user. In addition, an application server may authenticate to the database using its own set of credentials and therefore the database server cannot log the actual identity of a user executing a query. Therefore the present invention provides an advantage as the detection can be performed either on the link between the application server and the database or on the link between the user and the application server (where information from database logs is not required). This eliminates the need to correlate between the identity of the user and the matching SQL queries in the database.

Although examples of the invention have been described by way of illustration, it will be understood that the invention may be carried out with many variations, modifications, and adaptations, without exceeding the scope of the claims.

**Bibliography**

1. Chung, C.Y., Gertz, M., and Levitt, K. 1999. DEMIDS: A Misuse Detection System for Database Systems. In proceedings of the Conference on Integrity and Internal Control in Information Systems, 159-178.

2. 2010 CyberSecurity Watch Survey, http://www.cert.org/archive/pdf/ecrimesummary 10.pdf

3. Kamra, A., Terzi, E., Evimaria, and Bertino, E. 2008. Detecting Anomalous Access Patterns in Relational Databases. International Journal on Very Large Databases, 17, 5, 1063-1077.

4. Mathew, S., Petropoulos, M., Ngo, H., and Upadhyaya, S. 2009. A Data-Centric Approach to Insider Attack Detection in Database Systems. In Recent Advances in Intrusion Detection, Jha, S., Sommer, R., Kreibich, C. Ed. LNCS, Springer, Heidelberg. 6307, 382-401.

5. Fellegi, I. P., and Sunter, A. B. 1969. A theory for Record Linkage. Journal of American Statistical Society , 64, 328, 1183-1210.

6. Newcombe, H. B., and Kennedy, J. M. 1962. Record linkage: making maximum use of the discriminating power of identifying information. Communications of the ACM, 5, 11, 563-566.

7. Christen, P., and Goiser, K. 2007. Quality and Complexity Measures for Data Linkage and Deduplications. In Quality Measures in Data Mining, F. Guillet, and H. J. Hammilton Ed. Springer, Berlin / Heidelberg. 127-151.

8. Cohen W.W. 1998. Integration of heterogeneous databases without common domains using queries based on textual similarity. In Proceedings of ACM SIGMOD, Seattle, 201-212.

9. Galhardas, H., Florescu, D., and Shasha, D., Simon, E. 2000. An extensible framework for data cleaning. In Proceedings of ICDE, 312.

10. Nahm, U.Y., Bilenko, M., and Mooney, R.J. 2002. Two approaches to handling noisy variation in text mining. In Proceedings of the ICML-2002 workshop on text learning (Sydney, Australia), 18-27.

11.Mccallum, A., Nigam, K., and Ungar, L.H. 2000. Efficient clustering of high-dimensional datasets with application to reference matching. In Proceedings of ACM SIGKDD, Boston, 169-178.

12. Gu, L., and Baxter, R. 2004. Decision models for record linkage. In Proceedings of the 3rd Australasian data mining conference, Cairns, 241-254.

13. Sarawagi, S., Bhamidipaty, A. 2002. Interactive deduplication using active learning. In Proceedings of ACM SIGKDD, Edmonton, 269-278.

14. Fonseca, J., Vieira, M., and Madeira, H. 2008. Online Detection of Malicious Data Access Using DBMS Auditing.

In Proceedings of the 2008 ACM symposium on Applied Computing, 1013-1020.

15. Hu, Y., and Panda, B. 2003. Identification of Malicious Transactions in Database Systems. In Proceedings of 7th International Symposium on Database Engineering and Applications, 329-335.

16. Lee, S.Y., Low, W.L. and Wong, P.Y. 2002. Learning Fingerprints for a Database Intrusion Detection System. In Proceedings of the ESORICS, (Zurich, Switzerland, October 14-16, 2002). 2502, 2002, 264-279.

17. Spalka, E., and Lehnhardt, J. 2005. A Comprehensive Approach to Anomaly Detection in Relational Databases. In Proceedings of the Annual Working Conference on Data and Applications Security. 3654, 2005, 207-211.

18. Srivastava, A., Sural, S., and Majumdar, A.K. 2006. Database Intrusion Detection using Weighted Sequence Mining. Journal of Computers, 1, 4, 8-17.

19. Wenhui, S., and Tan, D. 2001. A novel intrusion detection system model for securing web-based database systems. In IEEE Proceedings of the 25th International Computer Software and Applications Conference on Invigorating Software Development.

20. Valeur, F., Mutz, D., and Vigna, G. 2005. A Learning-Based Approach to the Detection of SQL Attacks. In Proceedings of the Conference on Detection of Intrusions and Malware & Vulnerability Assessment.

21. Quinlan, J.R. 1993. C4. 5: programs for machine learning. Morgan Kaufmann.

22. Frank, E., Hall, M. A., Holmes, G., Kirkby, R., and Pfahringer, B. 2005. WEKA -A Machine Learning Workbench for Data Mining. The Data Mining and Knowledge Discovery Handbook, 1305-1314.

23. Ferri, C., Flach, P., and Hernández-Orallo, J. 2002. Learning Decision Trees Using the Area Under the ROC Curve. In Proceedings of the Nineteenth International Conference on Machine Learning. 139 - 146.

24. Dorfman, D.D., Alf, E. 1969. Maximum-likelihood estimation of parameters of signal-detection theory and determination of confidence intervals - rating-method data. J Math Psychol, 6. 487-496.

**Claims**

1. A method for detecting data misuse in an organization's network by applying a context based analysis, wherein said network comprises:

   a) a user application client for submitting and acquiring a user request for data;
   b) at least one database that contains data related to the activities of said organization;
   c) at least one application server adapted to receive said user request, to extract data from said at least one database, and to compile a result set which said application server returns to said user application client;
   d) a memory module for storing a detection model induced in a training stage;
   e) a detection server adapted to induce said detection model, to analyze said user request and said data extracted from said database, and to compare said analyzed user request and said data extracted from said database to said detection model; and
   f) communication links between the machines that comprise said network; wherein the method comprises the steps of:

   I. inputting to said detection server context attributes, which are relevant for the detection process;
   II. inputting to said detection server sensitive data attributes, that may be exposed to the user during his/her work;
   III. activating said detection server to execute a learning phase to induce an unsupervised detection model that is stored in said memory module, said unsupervised detection model profiling normal behavior using a tree-like detection model, which encapsulates a set of rules that describe the legitimate user behavior, wherein the construction of a decision tree and the process of deriving a set of rules representing a specific leaf of said decision tree is an iterative process, comprising the following steps:

i) inserting an input dataset, composed of result sets and the context in which they were retrieved, which functions as a training set;

ii) selecting a context attribute from a set of context attributes that define the context in which said result sets in said input data set were retrieved, the selected context attribute to be the root of said decision tree and splitting said input dataset into smaller datasets according to the values of the root attribute;

iii) repeating step (ii) with the other context attributes in said set of context attributes, selecting a new context attribute, from context attributes of said set of context attributes that have not been selected, to be placed in the next level of said tree until either all the context attributes have been used or the remaining dataset size is smaller than a predefined threshold; and

iv) generating rules for each leaf of the tree by extracting from said sensitive data attributes that have been input to said detection server frequent item-sets that characterize the data which can be legitimately retrieved in the specific context defined by the root of said decision tree associated with said leaf; and, the method including the steps carried out by the detection server of:

    A. retrieving the appropriate set of rules according to the context of the user request from said induced detection model stored in said memory module;

    B. cross-validating each record in said result set against the retrieved set of rules;

    C. determining an anomaly score for said user's request by subtracting the proportion of said records that match at least one rule in said retrieved set of rules from 1; and

    D. classifying the request as malicious and issuing an alert if said anomaly score is larger than a predefined threshold.

2. A method according to claim 1, wherein in step I, the defined context attributes are at least one of the following: time of execution; geographical location of the user; the role of the user; the type of the system; a user's seniority; a type of transaction; a user's age; a user's origin; a user's IP address; and information service (IS) Holidays.

3. A method according to claim 1, wherein in step II, the defined sensitive data attributes are at least one of the following: a name of a customer; an address of a customer; an age of a customer; type of a customer; date of birth of a customer; place of birth of a customer; gender of a customer; occupation of a customer; type of payment of a customer; average purchase amount of a customer; telephone number of a customer; plan of a customer; seniority of a customer; type of products purchased; and quantity of product purchased.

4. A method according to claim 1.III.(iv), wherein the frequent item-sets representing a specific leaf of the tree are generated by the following steps:

    a) generating all the rules that are supported by a predefined number of records (minsupport) ;

    b) choosing the rule with the highest minsupport for the final rule set and removing the records supporting it from the record set; and

    c) repeating step (b) until no more rules can be generated with the minimal support required or the dataset is smaller than a predefined threshold.

5. A method according to claim 1, wherein the rules for each leaf of the tree are generated by the following steps:

    a) calculating the probability of each value of each sensitive data attribute given the values of all other sensitive data attributes;

    b) repeating step (a) for each leaf in the model.

6. A method according to claim 1, wherein the quality of the split in step III(ii) is determined by:

    a) counting the number of records that appear in both of said split subsets in order to calculate the quality of said split;

    b) dividing said count by the union size of the resulting subsets for normalization;

    c) examining each possible value of the selected context attribute against the union of all other subsets if said selected context attribute has more than two possible values;

    d) calculating the final score for the context attribute by the weighted average of all the calculated outcomes; and

    e) repeating steps (a) to (d) for each possible split.

**Patentansprüche**

1. Verfahren zum Erkennen von Datenmissbrauch im Netzwerk einer Organisation durch Anwenden einer kontextbasierten Analyse, wobei das Netzwerk umfasst:

a) einen Benutzeranwendungs-Client zum Übermitteln und Erfassen einer Benutzeranfrage nach Daten;
b) mindestens eine Datenbank, die die Aktivitäten der Organisation betreffende Daten enthält;
c) mindestens einen Anwendungsserver, der dazu geeignet ist, die Benutzeranfrage zu empfangen, um Daten aus der mindestens einen Datenbank zu extrahieren und einen Ergebnissatz zu erstellen, den der Anwendungsserver an den Benutzeranwendungs-Client zurückschickt;
d) ein Speichermodul zum Speichern eines Erkennungsmodells, das in einer Trainingsstufe induziert ist;
e) einen Erkennungsserver, der dazu geeignet ist, das Erkennungsmodell zu induzieren, die Benutzeranfrage und die aus der Datenbank extrahierten Daten zu analysieren und die analysierte Benutzeranfrage und die aus der Datenbank extrahierten Daten mit dem Erkennungsmodell zu vergleichen; und
f) Kommunikationsverknüpfungen zwischen den Maschinen, die das Netzwerk umfassen; wobei das Verfahren die folgenden Schritte umfasst:

I. Eingeben von Kontextattributen in den Erkennungsserver, die für den Erkennungsprozess relevant sind;
II. Eingeben von schutzwürdigen Datenattributen in den Erkennungsserver, die dem Benutzer während seiner Arbeit offengelegt werden können;
III. Aktivieren des Erkennungsservers, um eine Lernphase auszuführen, um ein nicht überwachtes Erkennungsmodell zu induzieren, das in dem Speichermodul gespeichert ist, wobei das nicht überwachte Erkennungsmodell ein normales Verhalten unter Verwendung eines baumähnlichen Erkennungsmodells umreißt, das einen Regelsatz verkapselt, der das berechtigte Benutzerverhalten beschreibt, wobei der Aufbau eines Entscheidungsbaums und der Prozess des Herleitens eines Regelsatzes, der ein spezielles Blatt des Entscheidungsbaums darstellt, ein iterativer Prozess ist, der die folgenden Schritte umfasst:

i) Einfügen eines Eingabedatensatzes, der aus Ergebnissätzen und dem Kontext, in dem sie abgerufen wurden, besteht, und der als Trainingssatz dient;
ii) Auswählen eines Kontextattributs aus einem Satz von Kontextattributen, die den Kontext definieren, in dem die Ergebnissätze in dem Eingabedatensatz abgerufen wurden, wobei das ausgewählte Kontextattribut die Wurzel des Entscheidungsbaums sein soll, und Teilen des Eingabedatensatzes in kleinere Datensätze gemäß den Werten des Wurzelattributs;
iii) Wiederholen von Schritt (ii) mit den anderen Kontextattributen in dem Satz von Kontextattributen, Auswählen eines neuen Kontextattributs aus Kontextattributen von dem Satz von Kontextattributen, die nicht ausgewählt worden sind, um sie in der nächsten Ebene des Baums anzuordnen, bis entweder alle Kontextattribute verwendet worden sind oder die verbleibende Datensatzgröße kleiner als ein vorbestimmter Schwellenwert ist; und
iv) Erzeugen von Regeln für jedes Blatt des Baums durch Extrahieren, aus den schutzwürdigen Datenattributen, die in den Erkennungsserver eingegeben worden sind, von häufigen Positionssätzen, die die Daten kennzeichnen, die berechtigterweise in dem speziellen Kontext abgerufen werden können, der durch die Wurzel des dem Blatt zugeordneten Entscheidungsbaums definiert ist; und

wobei das Verfahren die folgenden Schritte umfasst, die von dem Erkennungsserver ausgeführt werden:

A. Abrufen des passenden Regelsatzes gemäß dem Kontext der Benutzeranfrage von dem induzierten, in dem Speichermodul gespeicherten Erkennungsmodell;
B. Kreuzvalidieren jeder Aufzeichnung in dem Ergebnissatz in Bezug auf den abgerufenen Regelsatz;
C. Bestimmen einer Unregelmäßigkeitsbewertung für die Benutzeranfrage durch Subtrahieren des Anteils der Aufzeichnungen, die zu mindestens einer Regel in dem abgerufenen Regelsatz von 1 passen; und
D. Klassifizieren der Anfrage als bösartig und Ausgeben eines Alarms, falls die Unregelmäßigkeitsbewertung größer als ein vorbestimmter Schwellenwert ist.

2. Verfahren gemäß Anspruch 1, wobei in Schritt I die definierten Kontextattribute mindestens eines der folgenden sind: Zeit der Ausführung; geographischer Standort des Benutzers; Rolle des Benutzers; Art des Systems; Dienstalter des Benutzers; Art der Transaktion; Alter des Benutzers; Herkunft des Benutzers; IP-Adresse des Benutzers und Informationsdienst (ID) Urlaub.

**3.** Verfahren gemäß Anspruch 1, wobei in Schritt II die definierten schutzwürdigen Datenattribute mindestens eines der folgenden sind: Name eines Kunden; Adresse eines Kunden; Alter eines Kunden; Art eines Kunden; Geburtsdatum eines Kunden; Geburtsort eines Kunden; Geschlecht eines Kunden; Beruf eines Kunden; Zahlungsart eines Kunden; durchschnittliche Kaufsumme eines Kunden; Telefonnummer eines Kunden; Plan eines Kunden; Zugehörigkeitszeit eines Kunden; Art der erworbenen Produkte und Menge der erworbenen Produkte.

**4.** Verfahren gemäß Anspruch 1.III.(vi), wobei die häufigen Positionssätze, die ein spezielles Blatt des Baums darstellen, durch die folgenden Schritte erzeugt werden:

a) Erzeugen aller Regeln, die von einer vorbestimmten Anzahl von Aufzeichnungen (Minsupport) unterstützt werden;
b) Auswählen der Regel mit dem höchsten Minsupport für den endgültigen Regelsatz und Entfernen der diese unterstützenden Aufzeichnungen aus dem Aufzeichnungssatz; und
c) Wiederholen von Schritt (b), bis keine Regeln mehr mit der erforderlichen Mindestunterstützung erzeugt werden können oder der Datensatz kleiner als ein vorbestimmter Schwellenwert ist.

**5.** Verfahren gemäß Anspruch 1, wobei die Regeln für jedes Blatt des Baums durch die folgenden Schritte erzeugt werden:

a) Berechnen der Wahrscheinlichkeit eines jeden Wertes eines jeden schutzwürdigen Datenattributs, wenn die Werte aller anderen schutzwürdigen Datenattribute gegeben sind;
b) Wiederholen von Schritt (a) für jedes Blatt in dem Modell.

**6.** Verfahren gemäß Anspruch 1, wobei die Qualität des Teilens in Schritt III(ii) bestimmt wird durch:

a) Zählen der Anzahl an Aufzeichnungen, die in beiden der geteilten Untersätze erscheinen, um die Qualität des Teilens zu berechnen;
b) Teilen der Zählung durch die Vereinigungsgröße der resultierenden Untersätze zur Normalisierung;
c) Untersuchen jedes möglichen Wertes des ausgewählten Kontextattributs gegenüber der Vereinigung aller anderen Untersätze, falls die ausgewählten Kontextattribute mehr als zwei mögliche Werte aufweisen;
d) Berechnen der endgültigen Bewertung für das Kontextattribut durch den gewichteten Durchschnitt aller berechneten Ergebnisse; und
e) Wiederholen der Schritte (a) bis (d) für jedes mögliche Teilen.

**Revendications**

**1.** Procédé pour détecter un mauvais usage de données dans un réseau d'organisation en appliquant une analyse basée sur contexte, dans lequel ledit réseau comprend :

a) un client d'application d'utilisateur pour soumettre et acquérir une requête d'utilisateur demandant des données ;
b) au moins une base de données qui contient des données qui sont rapportées aux activités de ladite organisation ;
c) au moins un serveur d'application qui est adapté de manière à ce qu'il reçoive ladite requête d'utilisateur, à ce qu'il extraie des données à partir de ladite au moins une base de données et à ce qu'il élabore un jeu de résultats que ledit serveur d'application retourne audit client d'application d'utilisateur ;
d) un module de mémoire pour stocker un modèle de détection qui est induit au niveau d'une étape d'apprentissage ;
e) un serveur de détection qui est adapté de manière à ce qu'il induise ledit modèle de détection, à ce qu'il analyse ladite requête d'utilisateur et lesdites données qui sont extraites à partir de ladite base de données et à ce qu'il compare ladite requête d'utilisateur analysée et lesdites données qui sont extraites à partir de ladite base de données audit modèle de détection ; et
f) des liaisons de communication entre les machines qui constituent ledit réseau ;

dans lequel le procédé comprend les étapes constituées par :

I. l'entrée, sur ledit serveur de détection, d'attributs de contexte, lesquels attributs sont pertinents pour le processus de détection ;

II. l'entrée, sur ledit serveur de détection, d'attributs de données sensibles, lesquels attributs peuvent être exposés à l'utilisateur pendant son travail ;

III. l'activation dudit serveur de détection de manière à ce qu'il exécute une phase d'apprentissage afin d'induire un modèle de détection non supervisé qui est stocké dans ledit module de mémoire, ledit modèle de détection non supervisé profilant un comportement normal en utilisant un modèle de détection similaire à une arborescence, lequel modèle encapsule un jeu de règles qui décrivent le comportement d'utilisateur légitime, dans lequel la construction d'une arborescence décisionnelle et le processus de dérivation d'un jeu de règles représentant une feuille spécifique de ladite arborescence décisionnelle constituent un processus itératif, comprenant les étapes qui suivent :

i) l'insertion d'un jeu de données d'entrée, composé de jeux de résultats et du contexte dans lequel ils ont été récupérés, lequel jeu de données joue le rôle de jeu d'apprentissage ;

ii) la sélection d'un attribut de contexte à partir d'un jeu d'attributs de contexte qui définissent le contexte dans lequel lesdits jeux de résultats dans ledit jeu de données d'entrée ont été récupérés, l'attribut de contexte sélectionné étant destiné à constituer la racine de ladite arborescence décisionnelle, et la séparation dudit jeu de données d'entrée selon des jeux de données plus petits en fonction des valeurs de l'attribut de racine ;

iii) la répétition de l'étape (ii) avec les autres attributs de contexte dans ledit jeu d'attributs de contexte, la sélection d'un nouvel attribut de contexte, parmi les attributs de contexte dudit jeu d'attributs de contexte qui n'ont pas été sélectionnés, lequel nouvel attribut de contexte est destiné à être placé dans le niveau suivant de ladite arborescence jusqu'à ce que soit tous les attributs de contexte aient été utilisés, soit la taille du jeu de données restant soit inférieure à un seuil prédéfini ; et

iv) la génération de règles pour chaque feuille de l'arborescence en extrayant, à partir desdits attributs de données sensibles qui ont été entrés sur ledit serveur de détection, des jeux d'éléments fréquents qui caractérisent les données qui peuvent être récupérées légitimement dans le contexte spécifique qui est défini par la racine de ladite arborescence décisionnelle qui est associée à ladite feuille ; et

le procédé incluant les étapes mises en oeuvre par le serveur de détection constituées par :

A. la récupération du jeu de règles approprié en fonction du contexte de la requête d'utilisateur à partir dudit modèle de détection induit qui est stocké dans ledit module de mémoire ;

B. la validation croisée de chaque enregistrement dans ledit jeu de résultats vis-à-vis du jeu de règles récupéré ;

C. la détermination d'un score d'anomalie pour ladite requête d'utilisateur en soustrayant la proportion desdits enregistrements qui correspondent à au moins une règle dans ledit jeu de règles récupéré de l'unité ; et

D. la classification de la requête comme étant malveillante et la délivrance d'une alerte si ledit score d'anomalie est supérieur à un seuil prédéfini.

2. Procédé selon la revendication 1, dans lequel, au niveau de l'étape I, les attributs de contexte définis sont au moins un attribut pris parmi ceux qui suivent : le temps d'exécution ; la localisation géographique de l'utilisateur ; le rôle de l'utilisateur ; le type du système ; une séniorité d'utilisateur ; un type de transaction ; un âge d'utilisateur ; une origine d'utilisateur ; une adresse IP d'utilisateur ; et des vacances du service d'information (IS).

3. Procédé selon la revendication 1, dans lequel, au niveau de l'étape II, les attributs de données sensibles définis sont au moins un attribut pris parmi ceux qui suivent : un nom d'un client ; une adresse d'un client ; un âge d'un client ; le type d'un client ; la date de naissance d'un client ; le lieu de naissance d'un client ; le genre d'un client ; l'activité professionnelle d'un client ; le type de paiement d'un client ; le montant d'achat moyen d'un client ; le numéro de téléphone d'un client ; le projet d'un client ; la séniorité d'un client ; le type de produits achetés ; et la quantité de produits achetés.

4. Procédé selon la revendication 1.III.(iv), dans lequel les jeux d'éléments fréquents qui représentent une feuille spécifique de l'arborescence sont générés au moyen des étapes qui suivent :

a) la génération de toutes les règles qui sont supportées par un nombre prédéfini d'enregistrements (minsupport) ;

b) le choix de la règle qui présente la valeur de minsupport la plus élevée pour le jeu de règles final et la suppression des enregistrements qui la supportent de manière à les ôter du jeu d'enregistrements ; et

c) la répétition de l'étape (b) jusqu'à ce que plus de règles présentant la valeur de support minimum requise ne puissent être générées ou jusqu'à ce que le jeu de données soit plus petit qu'un seuil prédéfini.

**5.** Procédé selon la revendication 1, dans lequel les règles pour chaque feuille de l'arborescence sont générées moyen des étapes qui suivent :

a) le calcul de la probabilité de chaque valeur de chaque attribut de données sensibles étant données les valeurs de tous les autres attributs de données sensibles ; et

b) la répétition de l'étape (a) pour chaque feuille dans le modèle.

**6.** Procédé selon la revendication 1, dans lequel la qualité de la séparation au niveau de l'étape III(ii) est déterminée par :

a) le comptage du nombre d'enregistrements qui apparaissent dans les deux sous-jeux séparés afin de calculer la qualité de ladite séparation ;

b) la division dudit comptage par la taille en termes d'union des sous-jeux résultants pour une normalisation ;

c) l'examen de chaque valeur possible de l'attribut de contexte sélectionné vis-à-vis de l'union de tous les autres sous-jeux si ledit attribut de contexte sélectionné présente plus de deux valeurs possibles ;

d) le calcul du score final pour l'attribut de contexte au moyen de la moyenne pondérée de tous les résultats calculés ; et

e) la répétition des étapes (a) à (d) pour chaque séparation possible.

Fig. 1

## Table I

| Name | City | ... |
|------|------|-----|
| Anna Klein | Berlin | |
| Benjamin Adler | Hamburg | |
| Carl Becker | Frankfurt | |

## Table II

| Name | City | ... |
|------|------|-----|
| Anna Klein | Munich | |
| Anna Klein | Berlin | |
| Anna Klein | Berlin | |
| Marie Schwarz | Bonn | |
| Benjamin Adler | Hamburg | |
| Paul Berg | Munich | |
| Carl Becker | Frankfurt | |
| Finn Hirsch | Hamburg | |
| Lara Wulf | Berlin | |

0.02 · · · 0.93 · 0.76

Similarity Threshold= 0.85

Fig. 2

**Benign User**

| SSN | FName | Lname | Address | City | Zip Code | Customer Type |
|---|---|---|---|---|---|---|
| 39765645 | Gerhard | Neubrandt | Braunsberger 29 | Berlin | 51046 | Private |

Berlin,
10:00

**Malicious User**

| SSN | FName | Lname | Address | City | Zip Code | Customer Type |
|---|---|---|---|---|---|---|
| 39765645 | Gerhard | Neubrandt | Braunsberger 29 | Berlin | 51046 | Private |
| 46190265 | Gerhard | Neubrandt | BAYRISCHE 33 | Hamburg | 85489 | Business |
| 33394158 | Erhard | Neubrandt | CLAUSEWITZ 31 | Hamburg | 54915 | Private |

Berlin,
23:00

**Fig. 3**

| Context Data | | | | Customer Data | | | |
|---|---|---|---|---|---|---|---|
| Action time | Action day | Action location | Action type | Customer City | Zip Code | Customer Type | Classification |
| Morning | Monday | Berlin | Select customer by name | Berlin | 51046 | Private | Benign |
| After-Hours | Saturday | Berlin | Select customer by name | Berlin | 51046 | Private | Malicious |
| After-Hours | Saturday | Berlin | Select customer by name | Hamburg | 85489 | Business | Malicious |
| After-Hours | Saturday | Berlin | Select customer by Invoice | Hamburg | 54915 | Private | Malicious |

**Fig. 4**

**Fig. 5**

| Action time | Action day | Action location | Action type | Customer City | Zip Code | Customer Type | Anomaly Score |
|---|---|---|---|---|---|---|---|
| Morning | Monday | Berlin | Select customer by name | Berlin | 51046 | Private | 0.01 |

**Fig. 6**

Fig. 7

Fig. 8

## Set of Rules:

```
Action
Location
```

─Berlin─→ **Action Time**
  ─Morning─→ 
  ─Evening─→

─Bonn─→ **Action Time**
  ─Morning─→
  ─Evening─→

| |
|---|
| 1. Customer City = 'Berlin' , Type= 'Business' |

| |
|---|
| 1. Customer City = 'Berlin', Type= 'Private' |
| 2. Customer City= 'Berlin', Type= 'Bussiness' |

| |
|---|
| 1. Customer City = 'Bonn' , Type= 'Business' |
| 2. Customer City= 'Bonn', Type= 'Private' |

| |
|---|
| 1. Customer City = 'Bonn', Type= 'Private' |

**Fig. 9**

| Day Of Week | Action Location | Action Time | Customer City | Customer Type |
|---|---|---|---|---|
| | | | | |
| | | | | |
| | | | | |
| | | | | |
| | | | | |
| | | | | |

Context Attributes     Sensitive Attributes

─Berlin─
─Bonn─
─Hamburg─

| Day Of Week | Action Time | Customer City | Customer Type |
|---|---|---|---|
| | | | |
| | | | |

| Day Of Week | Action Time | Customer City | Customer Type |
|---|---|---|---|
| | | | |
| | | | |

| Day Of Week | Action Time | Customer City | Customer Type |
|---|---|---|---|
| | | | |
| | | | |

**Fig. 10**

| Berlin | ⬌ | Bonn | ➡ | $S_1$ |
| | | Hamburg | | |

| Bonn | ⬌ | Berlin | ➡ | $S_2$ |
| | | Hamburg | | |

| Hamburg | ⬌ | Bonn | ➡ | $S_3$ |
| | | Berlin | | |

WeightedAVG$(S_1,S_2,S_3)$

**Fig. 11**

Generate all itemsets with the pre-defined $min_{support}$

⬇

Choose itemset with **highest** $min_{support}$

⬇

Remove all records from the dataset which support the chosen itemset

While
exist itemsets with $min_{support}$
Or
dataset size > t* initial
dataset size

**Fig. 12**

Fig. 13

```
                    ┌─────────────────┐
                    │   Data input    │
                    └────────┬────────┘
                             │
                             ▼
                 ┌───────────────────────┐
                 │  Step 1: defining     │
                 │  context attributes   │
                 └───────────┬───────────┘
                             │
                             ▼
                 ┌───────────────────────┐
                 │  Step 2: defining     │
                 │  sensitive data       │
                 │  attributes           │
                 └─────┬───────────┬─────┘
                       │           │
            ┌──────────┘           └──────────┐
            ▼                                 ▼
 ┌─────────────────────┐         ┌─────────────────────┐
 │  Step 3: inducing a │         │  Step 3: inducing   │
 │  supervised         │         │  an unsupervised    │
 │  detection model    │         │  detection model    │
 └──────────┬──────────┘         └──────────┬──────────┘
            │                               │
            ▼                               ▼
 ┌─────────────────────┐         ┌─────────────────────┐
 │  Step 4: detection  │         │  Step 4: detection  │
 └─────────────────────┘         └─────────────────────┘
```

Fig. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GAFNY et al.** Detecting Data Misuse By Applying Context-Based Data Linkage. *Proceedings of the 2010 ACM workshop on insider threats,* 08 October 2010, 3-11
- **CHUNG, C.Y. ; GERTZ, M. ; LEVITT, K.** DEMIDS: A Misuse Detection System for Database Systems. *In proceedings of the Conference on Integrity and Internal Control in Information Systems,* 1999, 159-178
- *CyberSecurity Watch Survey,* 2010, http://www.cert.org/archive/pdf/ecrimesummary 10.pdf
- **KAMRA, A. ; TERZI, E. ; EVIMARIA ; BERTINO, E.** Detecting Anomalous Access Patterns in Relational Databases. *International Journal on Very Large Databases,* 2008, vol. 17 (5), 1063-1077
- A Data-Centric Approach to Insider Attack Detection in Database Systems. **MATHEW, S. ; PETROPOULOS, M. ; NGO, H. ; UPADHYAYA, S.** Recent Advances in Intrusion Detection. Springer, 2009, vol. 6307, 382-401
- **FELLEGI, I. P. ; SUNTER, A. B.** A theory for Record Linkage. *Journal of American Statistical Society,* 1969, vol. 64 (328), 1183-1210
- **NEWCOMBE, H. B. ; KENNEDY, J. M.** Record linkage: making maximum use of the discriminating power of identifying information. *Communications of the ACM,* 1962, vol. 5 (11), 563-566
- Quality and Complexity Measures for Data Linkage and Deduplications. **CHRISTEN, P. ; GOISER, K.** In Quality Measures in Data Mining. Springer, 2007, 127-151
- **COHEN W.W.** Integration of heterogeneous databases without common domains using queries based on textual similarity. *In Proceedings of ACM SIGMOD,* 1998, 201-212
- **GALHARDAS, H. ; FLORESCU, D. ; SHASHA, D. ; SIMON, E.** An extensible framework for data cleaning. *In Proceedings of ICDE,* 2000, 312
- **NAHM, U.Y. ; BILENKO, M. ; MOONEY, R.J.** Two approaches to handling noisy variation in text mining. *In Proceedings of the ICML-2002 workshop on text learning (Sydney, Australia),* 2002, 18-27
- **MCCALLUM, A. ; NIGAM, K. ; UNGAR, L.H.** Efficient clustering of high-dimensional datasets with application to reference matching. *In Proceedings of ACM SIGKDD,* 2000, 169-178

- **GU, L. ; BAXTER, R.** Decision models for record linkage. *In Proceedings of the 3rd Australasian data mining conference,* 2004, 241-254
- **SARAWAGI, S. ; BHAMIDIPATY, A.** Interactive deduplication using active learning. *In Proceedings of ACM SIGKDD,* 2002, 269-278
- **FONSECA, J. ; VIEIRA, M. ; MADEIRA, H.** Online Detection of Malicious Data Access Using DBMS Auditing. *In Proceedings of the 2008 ACM symposium on Applied Computing,* 2008, 1013-1020
- **HU, Y. ; PANDA, B.** Identification of Malicious Transactions in Database Systems. *In Proceedings of 7th International Symposium on Database Engineering and Applications,* 2003, 329-335
- **LEE, S.Y. ; LOW, W.L. ; WONG, P.Y.** Learning Fingerprints for a Database Intrusion Detection System. *In Proceedings of the ESORICS,* 14 October 2002, vol. 2502, 264-279
- **SPALKA, E. ; LEHNHARDT, J.** A Comprehensive Approach to Anomaly Detection in Relational Databases. *In Proceedings of the Annual Working Conference on Data and Applications Security,* 2005, vol. 3654, 207-211
- **SRIVASTAVA, A. ; SURAL, S. ; MAJUMDAR, A.K.** Database Intrusion Detection using Weighted Sequence Mining. *Journal of Computers,* 2006, vol. 1 (4), 8-17
- **WENHUI, S. ; TAN, D.** A novel intrusion detection system model for securing web-based database systems. *In IEEE Proceedings of the 25th International Computer Software and Applications Conference on Invigorating Software Development,* 2001
- **VALEUR , F. ; MUTZ, D. ; VIGNA, G.** A Learning-Based Approach to the Detection of SQL Attacks. *In Proceedings of the Conference on Detection of Intrusions and Malware & Vulnerability Assessment,* 2005
- **QUINLAN, J.R.** programs for machine learning. Morgan Kaufmann, 1993, vol. C4, 5
- WEKA -A Machine Learning Workbench for Data Mining. **FRANK, E. ; HALL, M. A. ; HOLMES, G. ; KIRKBY, R. ; PFAHRINGER, B.** The Data Mining and Knowledge Discovery Handbook. 2005, 1305-1314
- **FERRI, C. ; FLACH, P. ; HERNÁNDEZ-ORALLO, J.** Learning Decision Trees Using the Area Under the ROC Curve. *In Proceedings of the Nineteenth International Conference on Machine Learning,* 2002, 139-146

- **DORFMAN, D.D. ; ALF, E.** Maximum-likelihood estimation of parameters of signal-detection theory and determination of confidence intervals - rating-method data. *J Math Psychol,* 1969, vol. 6, 487-496